# EUROPÄISCHE PATENTSCHRIFT

(11) **EP 0 699 861 B1**
(45) Veröffentlichungstag und Bekanntmachung des Hinweises auf die Patenterteilung: **05.07.2000**
(21) Anmeldenummer: 95112739.8
(22) Anmeldetag: 12.08.1995
(51) Int. Cl.: F16L 47/02, F16L 33/00, F16L 11/12

(54) **Hohlkörper, insbesondere Rohr, mit integrierter Dichtung**
Hollow element, in particular a pipe with integrated sealing means
Elément creux, notamment un tuyau avec joint d'étanchéité incorporé

(30) Priorität: 31.08.1994 DE 4430869
(43) Veröffentlichungstag der Anmeldung: 06.03.1996
(73) Patentinhaber: VERWALTUNGSGESELLSCHAFT GEIGER TECHNIK GmbH & Co. KG, D-82467 Garmisch-Partenkirchen (DE)
(72) Erfinder: Geiger, Albert, D-82467 Garmisch-Partenkirchen (DE)
(74) Vertreter: Flosdorff, Jürgen, Dr.

(56) Entgegenhaltungen:
- EP-A- 0 606 028
- EP-A- 0 606 483
- DE-A- 4 308 367
- DE-U- 9 319 880
- FR-A- 2 371 289

## Beschreibung

Die Erfindung betrifft einen Hohlkörper, dessen Wandung bevorzugt aus einem harten Kunststoff besteht und der in wenigstens einem Bereich gegenüber einem anderen Körper abgedichtet wird. Insbesondere betrifft die Erfindung ein Rohr, wobei als ein typisches Anwendungsgebiet Rohre einer Scheibenwaschanlage eines Kraftfahrzeugs zu nennen sind, die mit einem Ende auf einen Rohrstutzen mit einem sogenannten Tannenbaumprofil aufgesetzt werden. Dieser "Tannenbaum" hat die Aufgabe, den Rohrstutzen und das aufgesetzte Rohr sicher miteinander zu verbinden und dabei gegeneinander abzudichten.

Die Erfindung ist grundsätzlich auch auf Hohlkörper wie Behälter mit abzudichtendem Behälterhals und auf Schläuche anwendbar, deren Wandung aus einem weniger harten Kunststoff besteht.

Nachfolgend wird die Erfindung im Zusammenhang mit Rohren aus hartem Kunststoff beschrieben, die - wie oben erwähnt - beispielsweise als Rohre einer Scheibenwaschanlage Verwendung finden. Derartige Rohre werden im allgemeinen in der Weise hergestellt, daß ein schlauchförmiger Rohling in geradliniger Form extrudiert wird, wobei dieser Rohling in einem zweiten Schritt in eine gekrümmte Form gebracht wird. Wenn das Rohr abgekühlt ist, wird ein Rohrstutzen mit einer äußeren Tannenbaumkontur in das Rohr eingesetzt, wobei die zackenförmige Außenkontur unter geringfügiger Aufweitung des Rohres fest an dessen Innenfläche anliegt und für eine sichere Abdichtung sorgt.

Als Material für solche Rohre wird bisher hochwertiges Polyamid verwendet, welches eine dauerhaft gute Abdichtung gewährleistet, weil das Material nicht fließt und eine gewisse elastische Rückstellkraft beibehält. Dieses Material hat aber den Nachteil, daß es teuer ist, wodurch die Herstellungskosten eines solchen Rohres hoch sind.

Die EP-A-606 028 befaßt sich mit einer dichten Verbindung eines Rohres 10 mit einem rohrförmigen Ansatz. Hierzu wird vorgschlagen, daß an das Rohr 10 in einer Spritzgußform eine Dichtlippe 16 angespritzt wird, die aus einem Elastomer besteht, welches in der Form vulkanisiert oder vernetzt wird. Das Anspritzen einer Dichtlippe an einen fertigen Hohlkörper ist mit verhältnismäßig hohen Kosten verbunden.

Die DE-U-93 19 880.9 offenbart eine Kühlflüssigkeitsleitung, die aus einem Rohling blasgeformt ist, der über seine gesamte Länge zwei coextrudierte Kunststoffschichten aufweist, von denen eine weicher als die andere ist.

Der vorliegenden Erfindung liegt die Aufgabe zugrunde, einen Hohlkörper, insbesondere ein Rohr anzugeben, das dauerhaft gut abzudichten, dabei aber billiger herstellbar ist. Außerdem soll ein Verfahren zur Herstellung eines derartigen Hohlkörpers angegeben werden.

Diese Aufgaben werden erfindungsgemäß durch die Merkmale der Patentansprüche 1 und 8 gelöst. Vorteilhafte Weiterbildungen der Erfindung sind in den Unteransprüchen gekennzeichnet.

Die Wandung des erfindungsgemäßen Hohlkörpers enthält wenigstens in dem abzudichtenden Bereich zusätzlich eine Schicht aus einem weichen, vorzugsweise elastischen Kunststoff, und der Hohlkörper ist in einer Blasform geblasen. Die weiche Schicht wird erfindungsgemäß durch Coextrusion ausgebildet, indem an einem Bereich oder mehreren vorbestimmten Bereichen des Schlauchvorformlings, bevorzugt an dessen Ende, eine weiche Komponente zusammen mit der harten Träger-Komponente ausgebracht wird. Diese weiche Kunststoffschicht gewährleistet dauerhaft eine gute Abdichtung, da sich der Dichtungskörper, beispielsweise ein oben erwähnter

Die Wandung des erfindungsgemäßen Hohlkörpers enthält in einem oder mehreren abzudichtenden Bereichen zusätzlich eine Schicht aus einem weicheren, vorzugsweise elastischen Kunststoff, die durch Coextrusion auf die erste Kunststoffschicht aufgebracht ist, und der Hohlkörper ist in einer Blasform geblasen. Diese weichere Kunststoffschicht gewährleistet dauerhaft eine gute Abdichtung, da sich der Dichtungskörper beispielsweise ein oben erwähnter Rohrstutzen mit Tannenbaumkontur, in das elastische Material eindrückt und von diesem dicht umschlossen wird. Die weichere Kunststoffschicht hat die zur sicheren Abdichtung erforderliche Rückstellkraft, so daß an das Material der bevorzugt harten Trägerschicht in dieser Beziehung keine hohen Anforderungen gestellt werden müssen. Dies ermöglicht den Einsatz von billigerem Hartkunststoff, beispielsweise von Polypropylen, welches ohne die weich-elastische Dichtungsschicht zu diesem Zweck nicht verwendbar wäre, da es nicht über die erforderliche Rückstellkraft verfügt und sich fließend verformen kann.

Die weichere Kunststoffschicht befindet sich an der Innenseite der Rohrwandung, wenn in das Rohr ein Körper, beispielsweise ein Rohr kleineren Durchmessers mit äußerer "Tannenbaumkontur" eingesetzt werden soll, oder an der Außenseite der Rohrwandung, wenn das Rohr in ein weiteres Rohr größeren Durchmessers einzusetzen ist. Dabei kann das äußere Rohr einen oder mehrere radial innen angeformte Dichtungsringe oder Dichtungswülste habebn, die sich in die weichelastische Schicht des erfindungsgemäßen Rohres eindrücken und eine dauerhafte Abdichtung hervorrufen.

Das erfindungsgemäße Rohr kann an mehreren Bereichen Dichtungsschichten aus weichelastischem Kunststoff haben, beispielsweise zwei innenliegende und/oder zwei außenliegende Dichtungsbereiche an den Enden des Rohres oder beispielsweise an einem Ende eine innenliegende und an dem anderen Ende eine außen liegende Dichtungsschicht. Die Dichtungsschicht/Schichten können an beliebigen Stellen des Hohlkörpers bzw. Rohres ausgebildet sein und sich über jede zweckmäßige axiale Länge erstrecken.

Die Dicke der harten Kunststoff-Trägerschicht kann im Bereich der zusätzlich aufgebrachten weicheren Kunststoffschicht gleichbleibend oder aber verringert sein, was durch Steuerung der Düse des Coextrusionskopfes ohne weiteres einstellbar ist.

Als bevorzugte Werkstoffpaarungen für die zwei Kunststoffschichten können Polyolefine verwendet werden, insbesondere die Paarungen PP und PP/EPDM sowie PP und SEBS, oder Polyamide, bevorzugt in den Paarungen PA12 und PA12 weichgemacht sowie PA12GF30 und PA12 weichgemacht sowie T-Polyester, bevorzugt in der Paarung PETP und PETP Elastomer. Es wird jedoch hervorgehoben, daß die Erfindung nicht auf die genannten Werkstoffpaarungen beschränkt ist.

Gemäß der vorliegenden Erfindung können abzudichtende Hohlkörper z.B. Behälter oder Rohre billiger hergestellt werden, indem anstelle des hochwertigen Polyamids billigere Materialien eingesetzt werden, die die erforderliche Druckfestigkeit und Formstabilität des Hohlkörpers gewährleisten. Zur Abdichtung gegenüber einem anderen eingreifenden oder umgreifenden Bauteil wie z.B. einem Stutzen mit Tannenbaumkontur, einem Stopfen mit äußerer umlaufender Dichtungswulst, der in einen mit der Dichtungsschicht versehenen Behälterhals eingesetzt wird, oder einem Außenrohr mit innerer Ringwulst wird durch Coextrusion eine weichere, vorzugsweise elastische Kunststoffschicht auf die Trägerschicht aufgebracht, wobei die weichelastische Schicht die Dichtungsfunktion übernimmt.

Nachfolgend werden einige Ausführungsformen der Erfindung mit Bezug auf die Zeichnung beschrieben. Dabei zeigen auf weitgehend schematische Weise:
- Fig. 1: einen Endabschnitt eines erfindungsgemäßen Rohres mit innenliegender weichelastischer Dichtungsschicht und
- Fig. 2: einen Endabschnitt eines anderen erfindungsgemäßen Rohres mit außenliegender weichelastischer Dichtungsschicht.

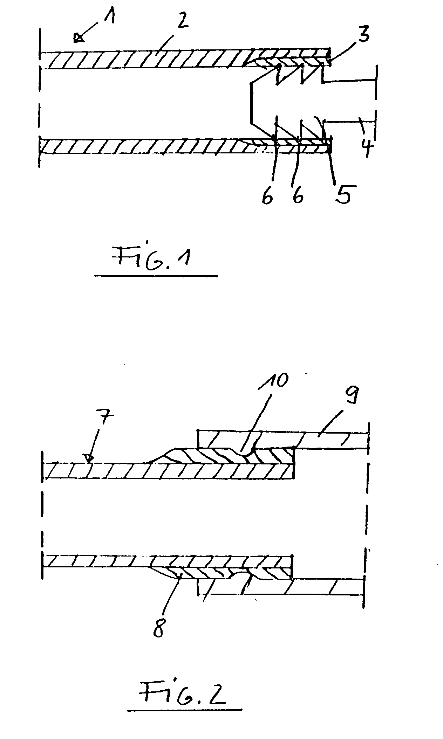

Fig. 1 zeigt einen Endabschnitt eines aus einem coextrudierten Rohlings hergestellten Rohres 1, dessen Wandung aus einer harten Kunststoffschicht 2 und an dem abzudichtenden Ende einer zusätzlichen weichelastischen Kunststoffschicht 3 besteht. Diese weichelastische Kunststoffschicht 3 befindet sich an der Innenseite des Rohres 1, da in dieses ein Rohrstutzen 4 mit einer äußeren Tannenbaumkontur 5 eingesetzt wird, deren Zacken 6 sich in die weichelastische Kunststoffschicht 3 derart eindrücken, daß eine absolut dichte Verbindung entsteht, die wegen der Elastizität der Schicht 3 dauerhaft zuverlässig ist. Die harte Trägerschicht 2, die für die notwendige Druckfestigkeit und Formstabilität des Rohres sorgt, muß in diesem Fall keine elastische Rückstellkraft haben.

Bei der Ausführungsform der Fig. 1 ist die Wandstärke der harten Kunststoffschicht 2 im Bereich der Abdichtung verringert, und zwar so, daß der aus zwei Schichten bestehende Endbereich im wesentlichen dieselbe Wandstärke hat wie die übrigen Bereiche. Aus Gründe der Druckfestigkeit und Formstabilität des Rohres kann es geboten sein, daß die Dicke der Schicht 2 auch im Dichtungsbereich unverändert (siehe Fig. 2) oder sogar erhöht ist, was durch geeignete Steuerung des Coextrusionskopfes ohne weiteres machbar ist.

Fig. 2 zeigt einen Endabschnitt eines Rohres 7 mit außenliegender weichelastischer Kunststoffschicht 8. Das Rohr 7 wird in ein Anschlußrohr 9 größeren Durchmessers eingesetzt, welches eine radial innenliegende, ringförmige Dichtungswulst 10 hat, die sich in die Schicht 8 eindrückt.

## Patentansprüche

1. Hohlkörper, insbesondere Rohr (1), dessen Wandung (2) aus einer Kunststoffschicht besteht, wobei die Wandung (2) in einem oder mehreren abzudichtenden Bereichen außerdem eine Schicht (3,8) aus einem weicheren Kunststoff aufweist, die durch Coextrusion auf die erste Kunststoffschicht aufgebracht ist, und wobei der Hohlkörper in einer Blasform geblasen ist.

2. Hohlkörper nach Anspruch 1,
dadurch gekennzeichnet, daß der weichere Kunststoff elastisch ist.

3. Hohlkörper nach Anspruch 1 oder 2,
dadurch gekennzeichnet, daß sich die Schicht (3) aus weicherem Kunststoff an der Innenseite der Wandung befindet.

4. Hohlkörper nach Anspruch 1 oder 2,
dadurch gekennzeichnet, daß sich die Schicht (8) aus weicherem Kunststoff an der Außenseite der Wandung (2) befindet.

5. Hohlkörper nach einem der Ansprüche 1 bis 4,
dadurch gekennzeichnet, daß als Werkstoffpaarung Polyolefine verwendet werden, insbesondere die Paarungen PP und PP/EPDM oder PP und SEBS.

6. Hohlkörper nach einem der Ansprüche 1 bis 4,
dadurch gekennzeichnet, daß als Werkstoffpaarung Polyamide verwendet werden, insbesondere die Paarungen PA12 und PA12 weichgemacht oder PA12GF30 und PA12 weichgemacht.

7. Hohlkörper nach einem der Ansprüche 1 bis 4,
dadurch gekennzeichnet, daß als Werkstoffpaarung T-Polyester verwendet werden, insbesondere die Paarung PETP und PETP Elastomer.

8. Verfahren zur Herstellung eines Hohlkörpers, insbesondere Rohr (1), wobei ein Rohling derart extrudiert wird, daß auf eine Kunststoffschicht in einem oder mehreren Bereichen eine Schicht (3,8) aus einem weicheren Kunststoff durch Coextrusion aufgebracht wird, und wobei der Rohling in einer Blasform zu dem Hohlkörper geblasen wird.

## Claims

1. A hollow body, in particular a tube (1), whose wall (2) consists of a plastic layer, said wall (2) being further provided in one or several areas to be sealed with a layer (3, 8) of a softer plastic material which is applied by coextrusion onto the first plastic layer, and the hollow body being blown in a blow mold.

2. The hollow body according to claim 1,
characterized in that the softer plastic material is elastic.

3. The hollow body according to claim 1 or 2,
characterized in that the layer (3) of the softer plastic material is provided on the inside of the wall.

4. The hollow body according to claim 1 or 2,
characterized in that the layer (8) of the softer plastic material is provided on the outside of the wall (2).

5. The hollow body according to any one of claims 1 to 4,
characterized in that polyolefins are used as the pair of materials, in particular the pairs PP and PP/EPDM or PP and SEBS.

6. The hollow body according to any one of claims 1 to 4,
characterized in that polyamides are used as the pair of materials, in particular the pairs PA12 and PA12 in the plasticized state or PA12GF30 and PA12 in the plasticized state.

7. The hollow body according to claims 1 to 4,
characterized in that T polyesters are used as the pair of materials, in particular the pair PETP and PETP elastomer.

8. Method of producing a hollow body, in particular a tube (1), wherein a blank is extruded such that a layer (3, 8) of a softer plastic material is further applied by coextrusion to a plastic layer in one or several areas, and the blank is blown in a blow mold to obtain the hollow body.

## Revendications

1. Corps creux, notamment tuyau (1), dont la paroi (2) est constituée d'une couche de matière synthétique, où la paroi (2) présente dans une ou plusieurs zones à rendre étanches de plus une couche (3, 8) en une matière synthétique plus molle qui est appliquée par coextrusion sur la première couche de matière synthétique, et où le corps creux est soufflé dans un moule de soufflage.

2. Corps creux selon la revendication 1, caractérisé en ce que la matière synthétique plus molle est élastique.

3. Corps creux selon la revendication 1 ou 2, caractérisé en ce que la couche (3) en matière synthétique plus molle se trouve au côté interne de la paroi.

4. Corps creux selon la revendication 1 ou 2, caractérisé en ce que la couche (8) en matière synthétique plus molle se trouve au côté externe de la paroi (2).

5. Corps creux selon l'une des revendications 1 à 4, caractérisé en ce que, comme appariement des matériaux, des polyoléfines sont utilisées, notamment les appariements PP et PP/EPDM ou PP et SEBS.

6. Corps creux selon l'une des revendications 1 à 4, caractérisé en ce que comme appariement des matériaux, des polyamides sont utilisés, notamment les appariements PA12 et PA12 assouplis ou PA12GF30 et PA12 assouplis.

7. Corps creux selon l'une des revendications 1 à 4, caractérisé en ce que, comme appariement des matériaux, des polyesters T sont utilisés, notamment l'appariement PETP et PETP élastomère.

8. Procédé de fabrication d'un corps creux, notamment d'un tuyau (1), où une ébauche est extrudée de façon à appliquer sur une couche de matière synthétique , dans une ou plusieurs zones, une couche (3, 8) en une matière synthétique plus molle, par coextrusion, et où l'ébauche est soufflée dans un moule de soufflage en un corps creux.
